# FASCICULE DE BREVET EUROPEEN

(11) **EP 2 266 191 B1**
(45) Date de publication et mention de la délivrance du brevet: **12.04.2017**
(21) Numéro de dépôt: 09731124.5
(22) Date de dépôt: 16.02.2009
(51) Int. Cl.: H02K 9/06

(54) **MACHINE ELECTRIQUE COMPORTANT UN VENTILATEUR A CANAUX MULTIPLES**
ELEKTROMASCHINE MIT VENTILATOR MIT MEHREREN KANÄLEN
ELECTRIC MACHINE COMPRISING A FAN WITH MULTIPLE DUCTS

(30) Priorité: 08.04.2008 FR 0852347
(43) Date de publication de la demande: 29.12.2010
(73) Titulaire: Moteurs Leroy Somer, 16000 Angouleme (FR)
(72) Inventeur: DUTAU, Alexis, F-16000 Angouleme (FR)
(74) Mandataire: Nony
(86) Numéro de dépôt international: PCT/FR2009/050242
(87) Numéro de publication internationale: WO 2009/125096

(56) Documents cités:
- FR-A- 1 092 054
- FR-A- 1 319 228
- GB-A- 390 291
- US-A- 1 896 749
- US-A- 1 996 460
- US-A1- 2004 150 270

## Description

La présente invention concerne les machines électriques tournantes et plus particulièrement le refroidissement de telles machines.

Il est connu d'entraîner avec le rotor un ventilateur qui assure la circulation d'un fluide de refroidissement au travers de la machine.

L'invention vise à perfectionner encore le refroidissement des machines électriques dites « ouvertes » dans lesquelles l'air est prélevé dans l'environnement de la machine puis rejeté par le ventilateur dans celui-ci.

Le brevet US 1 896 749 décrit un ventilateur à double canal. Les deux flux d'air générés par ce ventilateur se rejoignent avant de traverser la machine. Ils ne traversent pas séparément le stator et le rotor.

La demande US 2004/0 150 270 A1 divulgue des machines fermées à ventilateur à double canal dans lesquelles les flux d'air circulent en sens contraires à travers le rotor et le stator.

Le brevet US 1 996 460 divulgue un moteur à induction comportant un ventilateur équipé de deux jeux d'ailettes séparées par une plaque séparatrice.

Le brevet GB 390,291 décrit une machine fermée dans laquelle les flux d'air circulent dans le même sens et de façon séparée à travers le rotor et le stator, mais pas dans l'entrefer.

L'invention a pour objet, selon l'un de ses aspects, une machine électrique tournante telle que définie dans la revendication 1.

De façon avantageuse, les premier et second flux d'air peuvent circuler de façon séparée dans la machine, et dans le même sens, par exemple depuis une entrée commune vers le ventilateur.

L'invention permet, dans une certaine mesure, d'augmenter le débit global d'air traversant la machine, donc les échanges convectifs, notamment au niveau du rotor, grâce à la séparation des flux d'airs. Le voile de matière du ventilateur peut augmenter localement les coefficients d'échanges convectifs sur les bobinages du rotor.

Le voile de matière peut être situé sensiblement dans le prolongement de la surface du stator adjacente à l'entrefer. Le diamètre intérieur de ce voile de matière peut correspondre au diamètre intérieur du stator.

Le voile de matière présente au moins un ajour. Cet ajour est par exemple défini par une encoche s'étendant à partir de l'extrémité du voile de matière adjacente à l'entrefer. L'ajour s'étend de préférence ailleurs que dans le prolongement d'un canal interpolaire du rotor, ce qui permet au voile de matière de capter efficacement le flux d'air circulant dans ce canal interpolaire. La présence des ajours permet de limiter la perte de charge induite par la présence de ce voile de matière.

Le voile de matière peut s'étendre sensiblement jusqu'à un paquet de tôles rotoriques et/ou peut venir axialement en recouvrement total ou partiel des têtes de bobines du stator.

Le voile de matière peut présenter une forme divergeant en éloignement de son bord libre adjacent à l'entrefer. Le voile peut avoir une portion d'entrée légèrement conique, d'angle au sommet compris entre 0° et 45°, mieux entre 0 et 20 °.

Le voile de matière peut avoir, au sein du ventilateur, un profil orienté vers l'extérieur, qui peut se terminer par une portion terminale conique, d'angle au sommet compris entre 0° et 60 °, mieux entre 5 et 20.

Le ventilateur peut définir des canaux d'éjection d'air orientés obliquement par rapport à l'axe de rotation de la machine.

Les pales générant le premier flux d'air peuvent être de plus faible longueur que celles générant le deuxième flux d'air lorsque les pertes de charges à travers le stator sont moins importantes que celles à travers le rotor.

Le débit du premier flux d'air est par exemple compris entre 0 et 20 m³/s et celui du deuxième est par exemple compris entre 0 et 20 m³/s.

Le rotor peut être un rotor bobiné.

La machine peut constituer un alternateur. Dans ce cas, les premier et deuxième flux d'air peuvent pénétrer dans la machine par des ouvertures disposées autour d'une excitatrice de l'alternateur. L'alternateur peut encore être à excitatrice intégrée. La machine peut encore être un moteur.

La puissance électrique de la machine est par exemple supérieure ou égale à 1 kVA.

L'invention pourra être mieux comprise à la lecture de la description détaillée qui va suivre, d'un exemple de mise en oeuvre non limitatif de celle-ci, et à l'examen du dessin annexé, sur lequel :
- la figure 1 représente, en vue de côté, une machine qui ne fait pas partie de l'invention,
- la figure 2 est une coupe longitudinale, schématique et partielle, de la machine de la figure 1,
- la figure 3 est une vue analogue à la figure 2, dans un plan de coupe différent,
- la figure 4 représente un détail de la figure 2,
- la figure 5 représente un détail de la figure 3,
- la figure 6 représente isolément le rotor,
- la figure 7 est une vue schématique, en perspective, du rotor,
- la figure 8 représente isolément, en perspective, le ventilateur,
- la figure 9 est une vue analogue à la figure 6 d'une machine réalisée conformément a l'invention.
- la figure 10 représente de manière schématique et en perspective le rotor de la figure 9, et
- la figure 11 représente isolément le ventilateur de la figure 9.

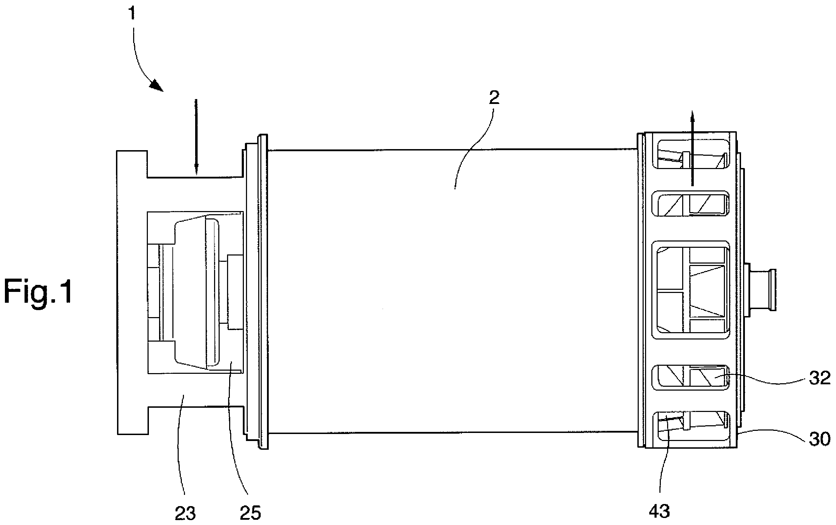

La machine électrique tournante 1 représentée sur les figures 1 à 3 comporte un carter 2, duquel est solidaire un stator 4 comportant un paquet de tôles magnétiques statoriques et des enroulements 5.

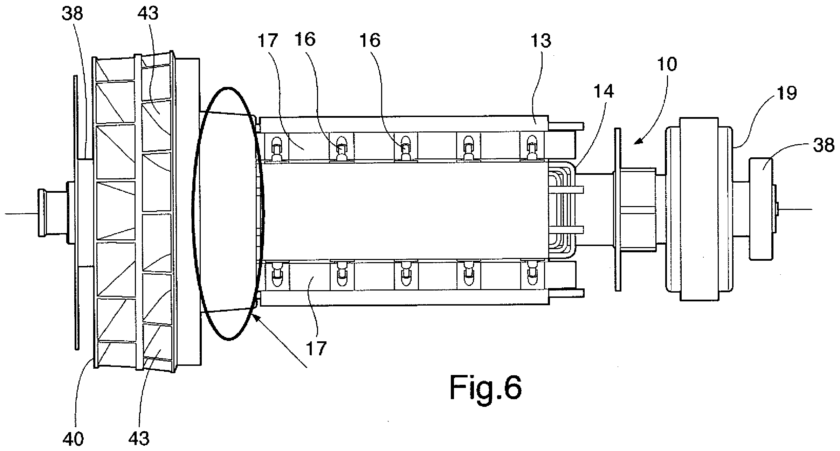

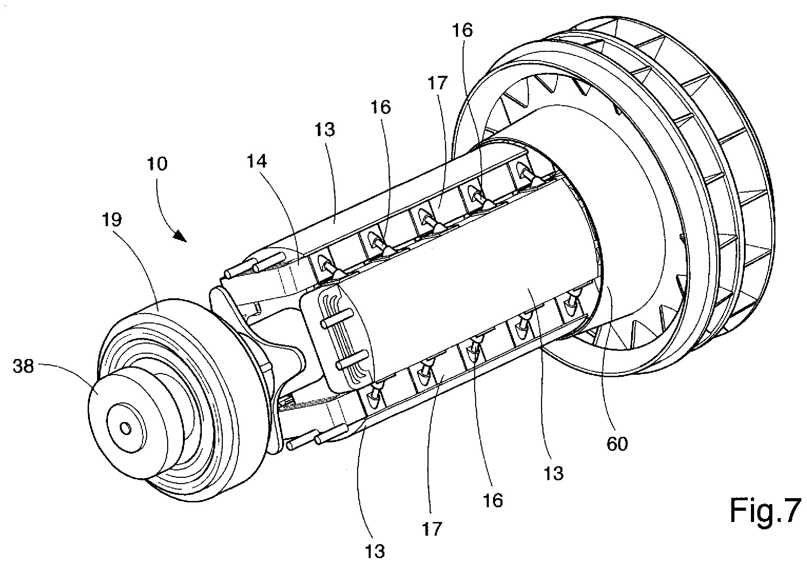

La machine 1 comporte également un rotor 10, que l'on a représenté isolément sur les figures 6 et 7, qui comporte un arbre 12 portant un paquet de tôles rotoriques 13 et des enroulements 14.

Dans l'exemple considéré, la machine 1 est un alternateur de forte puissance et le rotor, encore appelé roue polaire, comporte des cales 16 qui maintiennent les bobinages comme visible sur la figure 6.

Des canaux interpolaires 17 sont formés entre les pôles du rotor, comme l'on peut le voir notamment à la figure 7.

Le rotor 10 peut porter une excitatrice 19 qui peut interagir avec un stator d'excitatrice 20 au sein d'un premier flasque d'extrémité 23, lequel est dans l'exemple considéré rapporté sur le carter 2 à l'extrémité axiale de celui-ci, et supporte des roulements 38.

Le flasque 23 comporte des ajours 25 qui définissent des entrées d'air de refroidissement de la machine.

La machine 1 comporte également un deuxième flasque d'extrémité 30, à l'opposé du premier, qui comporte des ouvertures 32 pour l'évacuation de l'air de refroidissement de la machine.

Le deuxième flasque d'extrémité 30 supporte un ensemble de roulements 36.

Le rotor 10 entraîne en rotation un ventilateur 40, lequel est partiellement logé à l'intérieur du deuxième flasque d'extrémité 30.

Ce ventilateur 40 comporte un premier canal 42 au sein duquel sont disposées des pales 43 pour créer un premier flux d'air de refroidissement A circulant depuis les entrées d'air 25 dans au moins un passage 52 situé entre le carter 2 et le paquet de tôles statoriques 6.

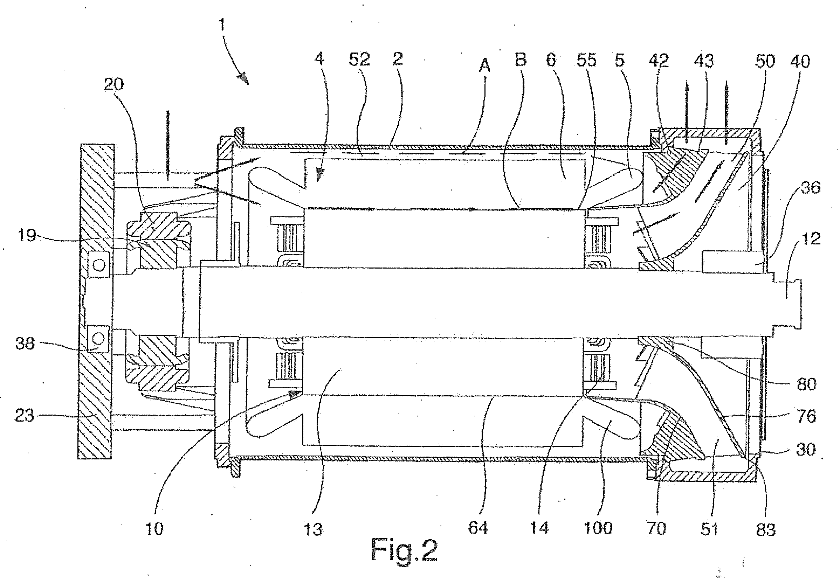

Le ventilateur 40 comporte un deuxième canal 50 pourvu de pales 51, lesquelles génèrent un deuxième flux d'air de refroidissement B, circulant à la fois dans l'entrefer 55 entre le rotor et le stator, comme on le voit sur la figure 2, et également dans les canaux interpolaires 17.

Le ventilateur 40 comporte un voile de matière 60 qui sépare les canaux 42 et 50 et se prolonge axialement au-delà des pales 51 vers le stator sous la forme d'un cône dont le diamètre croit légèrement dans la direction d'écoulement de l'air.

Le voile 60 présente à son extrémité un diamètre intérieur qui correspond sensiblement à celui du stator, de sorte que le bord libre 62 du voile 60 est situé sensiblement dans le prolongement de la surface radialement intérieure 64 du stator.

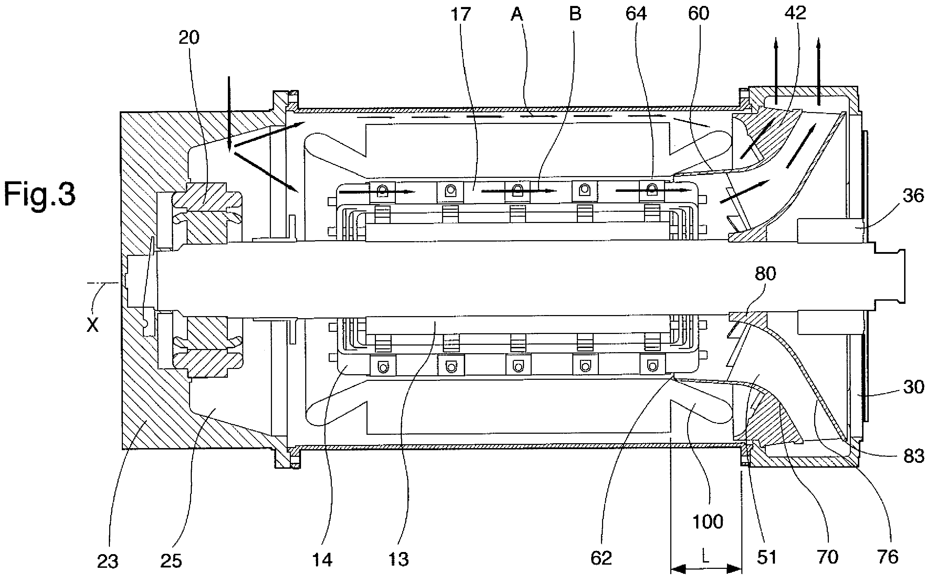

Le voile 60 vient en recouvrement axial avec les têtes de bobines 100 du stator sur une distance L, comme on peut le voir à la figure 3.

Le voile 60 forme, à l'intérieur du ventilateur 40, le voile aval du canal 42.

Le ventilateur 40 comporte un second voile 76 qui délimite le canal 50, ce voile 76 s'étendant depuis le moyeu 80 du ventilateur 40 jusqu'à l'extrémité 83 de celui-ci la plus éloignée axialement du paquet de tôles statoriques.

Le voile 76 est orienté, à la sortie du ventilateur, sensiblement parallèlement au voile 60.

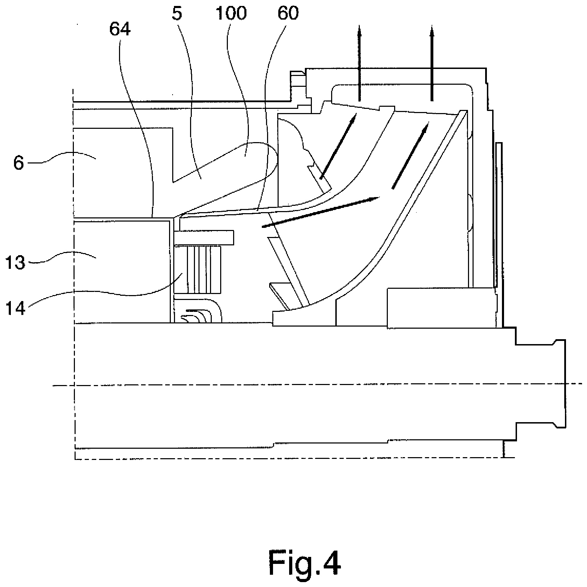

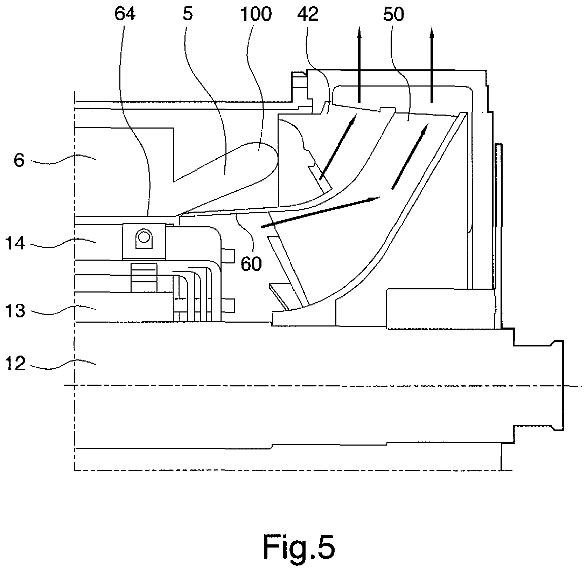

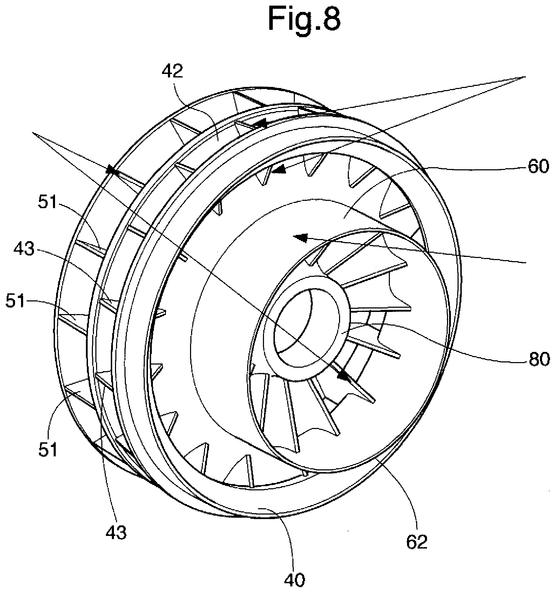

Dans l'exemple de la machine selon les figures 1 à 8, le voile 60 est continu angulairement.

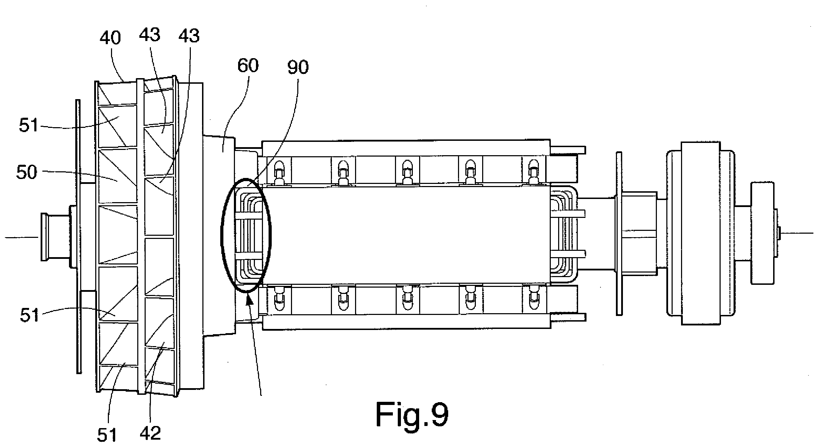

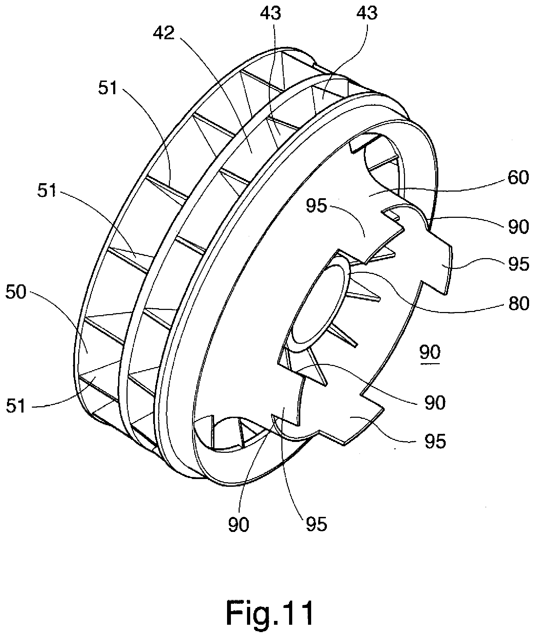

Dans la variante de réalisation des figures 9 à 11, le voile 60 comporte des ajours 90 sur la portion qui vient en recouvrement des têtes de bobines 100.

Ces ajours 90 se présentent sous la forme d'encoches et permettent de diminuer les pertes de charges.

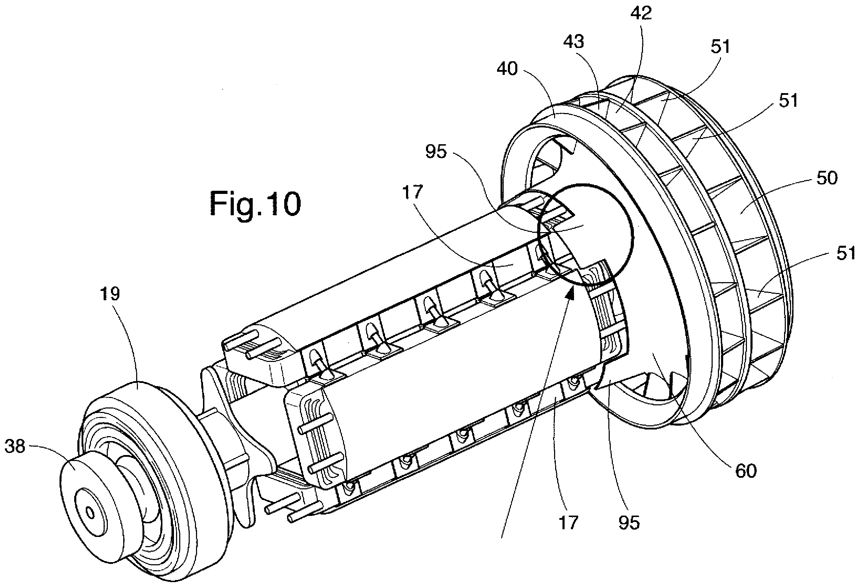

Les portions pleines 95 s'étendant entre les ajours 90 sont positionnées angulairement dans le prolongement des canaux interpolaires 17, ce qui permet d'appliquer la dépression créée par le ventilateur en bout de ces canaux interpolaires 17, comme visible sur la figure 10.

Les flux A et B, en circulant dans le même sens et de façon séparée dans la machine, participent à son refroidissement d'une manière efficace.

Bien entendu, l'invention n'est pas limitée aux exemples qui viennent d'être décrits.

La machine peut être réalisée différemment, notamment quant à la forme du ventilateur, du/des rotors et/ou du/des stators. La machine peut être dépourvue d'excitatrice. La machine peut être à rotor intérieur, comme illustré, ou à rotor extérieur.

La machine peut ne pas être un alternateur mais un moteur.

Le ventilateur peut être réalisé avec des canaux et/ou pales disposés autrement.

L'invention s'applique à toute machine ouverte refroidie par un fluide mis en mouvement par l'action d'un ventilateur au moins.

L'expression "comportant un...." doit être comprise comme étant synonyme de «comportant au moins un», sauf si le contraire est spécifié.

## Revendications

1. Machine électrique tournante (1) ouverte comportant un rotor (10) tournant relativement à au moins un stator (4) et définissant au moins un entrefer avec le stator, le rotor entraînant en rotation au moins un ventilateur (40) à deux canaux au moins, ce ventilateur comportant un premier canal (42) générant un premier flux d'air (A) de refroidissement traversant le stator et un deuxième canal générant un deuxième flux d'air (B) de refroidissement traversant le rotor de façon séparée du premier flux d'air et dans le même sens, le ventilateur comportant un voile de matière (60) séparant les premier et second flux d'air, **caractérisé par le fait que** le voile de matière (60) présente au moins un ajour (90).

2. Machine selon la revendication 1, les premier et deuxième flux d'air étant générés à partir d'une entrée d'air commune de la machine.

3. Machine selon la revendication 1 ou 2, le premier et deuxième flux d'air pénétrant dans la machine par des ouvertures (25) disposées autour d'une excitatrice (19,20) d'un alternateur.

4. Machine selon l'une quelconque des revendications 1 à 3, le voile de matière (60) étant situé sensiblement dans le prolongement de la surface du stator adjacente à l'entrefer.

5. Machine selon l'une quelconque des revendications 1 à 4, le voile (60) présentant une forme angulairement continue jusqu'à son extrémité libre.

6. Machine selon l'une quelconque des revendications précédentes, l'ajour (90) étant situé ailleurs que dans le prolongement d'un canal interpolaire (17) du rotor.

7. Machine selon l'une quelconque des revendications précédentes, l'ajour (90) étant formé par une encoche s'étendant à partir de l'extrémité (62) du voile (60) adjacente à l'entrefer

8. Machine selon l'une quelconque des revendications précédentes, le voile (60) s'étendant sensiblement jusqu'à un paquet de tôles rotoriques.

9. Machine selon l'une quelconque des revendications précédentes, le voile (60) venant axialement en recouvrement total ou partiel de têtes de bobines (100) du stator.

10. Machine selon l'une quelconque des revendications précédentes, le voile (60) divergeant en éloignement de son bord libre (62) adjacent à l'entrefer.

11. Machine selon l'une quelconque des revendications précédentes, le voile (60) se prolongeant au sein du ventilateur avec un profil orienté radialement vers l'extérieur.

12. Machine selon l'une quelconque des revendications précédentes, le ventilateur (40) définissant des canaux d'éjection d'air orientés obliquement par rapport à l'axe de rotation de la machine.

13. Machine selon l'une quelconque des revendications précédentes, le débit du premier flux d'air (A) étant compris entre 0 et 20 m³/s.

14. Machine selon l'une quelconque des revendications précédentes, le débit du deuxième flux d'air (B) étant compris entre 0 et 20 m³/s.

## Patentansprüche

1. Elektrische Maschine (1) in offener Bauweise, mit einem Rotor (10), der sich relativ zu wenigstens einem Stator (4) dreht und mit dem Stator wenigstens einen Luftspalt bildet, wobei der Rotor wenigstens einen Ventilator (40) mit wenigstens zwei Kanälen zur Drehung antreibt und dieser Ventilator einen ersten Kanal (42), der einen ersten Kühlluftstrom (A) erzeugt, der den Stator durchströmt, und einen zweiten Kanal aufweist, der einen zweiten Kühlluftstrom (B) erzeugt, der den Rotor getrennt von dem ersten Luftstrom und in gleichem Sinne durchströmt, wobei der Ventilator ein Materialsegel (60) aufweist, das die ersten und zweiten Kühlluftströme trennt, **dadurch gekennzeichnet, dass** das Materialsegel (16) wenigstens einen Durchbruch (90) aufweist.

2. Maschine nach Anspruch 1, bei der die ersten und zweiten Luftströme so erzeugt werden, dass sie von einem gemeinsamen Lufteinlass der Maschine ausgehen.

3. Maschine nach Anspruch 1 oder 2, bei der die ersten und zweiten Luftströme Öffnungen (25) in der Maschine durchströmen, die um einen Erreger (19, 20) eines Alternators herum angeordnet sind.

4. Maschine nach einem der Ansprüche 1 bis 3, bei der das Materialsegel (60) im wesentlichen in Verlängerung der an den Luftspalt angrenzenden Oberfläche des Stators angeordnet ist.

5. Maschine nach einem der Ansprüche 1 bis 4, bei der das Materialsegel (60) bis zu seinem freien Ende hin eine durchgehend gekrümmte Form hat.

6. Maschine nach einem der vorstehenden Ansprüche, bei der der Durchbruch (90) sich außerhalb der Verlängerung eines Zwischenpolkanals (17) des Rotors befindet.

7. Maschine nach einem der vorstehenden Ansprüche, bei der der Durchbruch (90) durch eine Kerbe gebildet ist, die sich von dem an den Luftspalt angrenzenden Ende (62) des Materialsegels (60) aus erstreckt.

8. Maschine nach einem der vorstehenden Ansprüche, bei der sich das Materialsegel (60) im wesentlichen bis zu einem Rotorblechpaket erstreckt.

9. Maschine nach einem der vorstehenden Ansprüche, bei der das Materialsegel (60) Köpfe von Spulen (100) des Stators in axialer Richtung ganz oder teilweise überdeckt.

10. Maschine nach einem der vorstehenden Ansprüche, bei der das Materialsegel (60) mit zunehmendem Abstand von seinem an den Luftspalt angrenzenden freien Ende (62) divergiert.

11. Maschine nach einem der vorstehenden Ansprüche, bei der das Materialsegel (60) im Inneren des Ventilators durch ein Profil verlängert ist, das radial nach außen gerichtet ist.

12. Maschine nach einem der vorstehenden Ansprüche, bei der der Ventilator (40) Kanäle zum Ausstoß von Luft bildet, die schräg in Bezug auf die Drehachse der Maschine orientiert sind.

13. Maschine nach einem der vorstehenden Ansprüche, bei der der Durchsatz des ersten Luftstromes (A) zwischen 0 und 20 m³/s beträgt.

14. Maschine nach einem der vorstehenden Ansprüche, bei der der Durchsatz des zweiten Luftstromes (B) zwischen 0 und 20 m³/s beträgt.

## Claims

1. An open rotary electric machine (1) having a rotor (10) mounted to rotate relative to at least one stator (4) and co-operating with the stator to define at least one airgap, the rotor being suitable for rotating at least one fan (40) having at least two channels, said fan including a first channel (42) generating a first cooling air stream (A) passing through the stator, and a second channel generating a second cooling air stream (B) passing through the rotor in the same direction as the first air stream and in separate manner, the fan including a solid web (60) separating the first and second air streams **characterized by** the fact that the web (60) presents at least one aperture (90).

2. A machine according to claim 1, the first and second air streams being generated from a common air inlet of the machine.

3. A machine according to claim 1 or claim 2, the first and second air streams penetrating into the machine via openings (25) disposed around an exciter (19, 20) of the alternator.

4. A machine according to any one of claims 1 to 3, the solid web (60) being situated substantially in line with the surface of the stator that is adjacent to the airgap.

5. A machine according to any one of claims 1 to 4, the web (60) presenting a shape that is angularly continuous as far as its free end.

6. A machine according to any preceding claim, the aperture (90) being situated other than in line with an inter-pole channel (17) of the rotor.

7. A machine according to any preceding claim, the aperture (90) being formed by a notch extending from the end (62) of the web (60) adjacent to the airgap.

8. A machine according to any preceding claim, the web (60) extending substantially as far as a stack of rotor laminations.

9. A machine according to any preceding claim, the web (60) extending axially so as to overlie the stator coil overhangs (100) completely or in part.

10. A machine according to any preceding claim, the web (60) diverging away from its free end (62) adjacent to the airgap.

11. A machine according to any preceding claim, the web (60) extending within the fan with a profile that is oriented radially outwards.

12. A machine according to any preceding claim, the fan (40) defining air ejection channels that are oriented obliquely relative to the axis of rotation of the machine.

13. A machine according to any preceding claim, the flow rate of the first air stream (A) lying in the range 0 to 20 m³/s.

14. A machine according to any preceding claim, the flow rate of the second air stream (B) lying in the range 0 to 20 m³/s.
